# EUROPEAN PATENT APPLICATION

(11) **EP 4 711 760 A1**
(43) Date of publication of application: **18.03.2026**
(21) Application number: 24807051.8
(22) Date of filing: 30.04.2024
(51) Int. Cl.: G01N 30/54

(54) **COLUMN CARTRIDGE AND ANALYZER**

(30) Priority: 12.05.2023 JP 2023079384
(71) Applicant: HITACHI HIGH-TECH CORPORATION, Tokyo 105-6409 (JP)
(72) Inventor: SEKIYA Kazuma, Tokyo 105-6409 (JP); SHIMIZU Yusuke, Tokyo 105-6409 (JP); IIJIMA Yu, Tokyo 105-6409 (JP)
(74) Representative: Strehl & Partner mbB
(86) International application number: PCT/JP2024/016741
(87) International publication number: WO 2024/237097

(57) **Abstract**

Provided are a column cartridge and an analyzer by which an operator can safely and easily replace a separation column while preventing an increase in cost and environmental burden. The column cartridge according to the present invention includes: a separation column having a built-in stationary phase; a heat transfer body configured to transfer heat from a heating mechanism to the separation column; and a housing configured to accommodate the separation column and the heat transfer body. A heat insulating layer is formed between the heat transfer body and the housing. The heat insulating layer is preferably a gap formed at a position excluding a plurality of support portions that support the heat transfer body.

## Description

### Technical Field

The present invention relates to a column cartridge and an analyzer.

### Background Art

In recent years, attempts have been made to use a device combining a chromatograph and a mass spectrometer (hereinafter referred to as LC-MS) for testing body fluids such as blood. The chromatograph passes a mobile phase containing a sample through a separation column filled with a stationary phase, and separates and detects the sample based on a difference in interactions between the stationary phase and the mobile phase. Here, it is known that the separation column has a cartridge shape so that an operator can easily replace the separation column since the separation column is a consumable. However, precautions must be taken to prevent the operator from sustaining burns during replacement since the separation column is heated and maintained at a constant temperature to improve sample separation efficiency. For example, Patent Literature 1 discloses a technique of a chromatograph in which a column cartridge and a column heat block are separated by a heat insulating material (paragraphs 0030 and 0035).

### Citation List

### Patent Literature

PTL 1: WO2020/175651A

### Summary of Invention

### Technical Problem

In the technique disclosed in Patent Literature 1, the heat insulating material is used to make heat of the column heat block (heat transfer body) less likely to be transferred to a surface of the column cartridge, which leads to an increase in cost and environmental burden.

An object of the invention is to provide a column cartridge and an analyzer by which an operator can safely and easily replace a separation column while preventing an increase in cost and environmental burden.

### Solution to Problem

To solve the above-described problem, the column cartridge according to the invention includes: a separation column having a built-in stationary phase; a heat transfer body configured to transfer heat from a heating mechanism to the separation column; and a housing configured to accommodate the separation column and the heat transfer body. A heat insulating layer is formed between the heat transfer body and the housing.

### Advantageous Effects of Invention

According to the invention, it is possible to provide a column cartridge and an analyzer by which an operator can safely and easily replace a separation column while preventing an increase in cost and environmental burden.

### Brief Description of Drawings

[FIG. 1] FIG. 1 is a side view schematically showing a state in which a column cartridge is provided in a chromatograph.
[FIG. 2] FIG. 2 is a top perspective view of the column cartridge.
[FIG. 3] FIG. 3 is a bottom perspective view of the column cartridge.
[FIG. 4] FIG. 4 is a top cross-sectional view showing an internal structure of the column cartridge.
[FIG. 5] FIG. 5 is a front cross-sectional view showing the internal structure of the column cartridge.

### Description of Embodiments

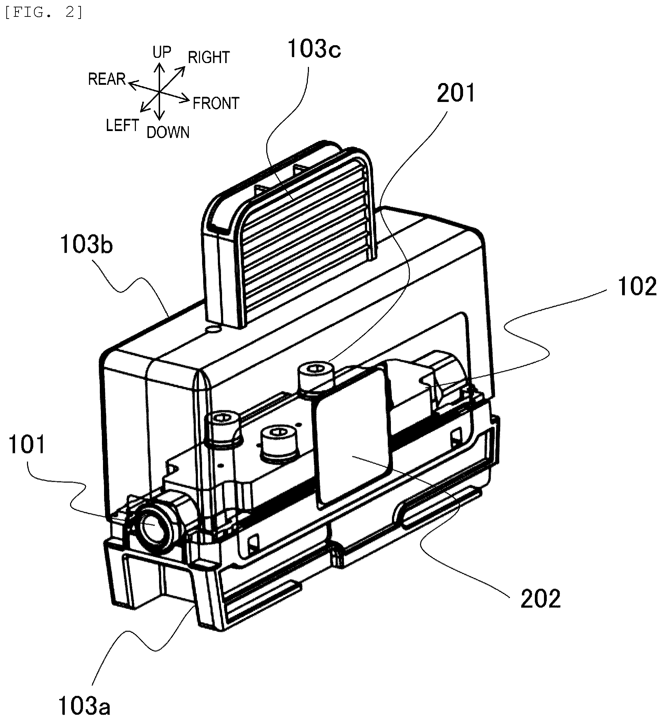

Hereinafter, an embodiment of the invention will be described with reference to the drawings. In the present description, upward, downward, leftward, rightward, forward, and rearward directions are based on upward, downward, leftward, rightward, forward, and rearward directions shown in FIG. 2.

In the embodiment of the invention, a liquid chromatograph (LC) will be described as an example of a target of a column cartridge, but the invention is not limited thereto, and can be applied to other chromatographs such as a high performance liquid chromatograph (HPLC), an ultra-high performance liquid chromatograph (UHPLC), and a gas chromatograph (GC).

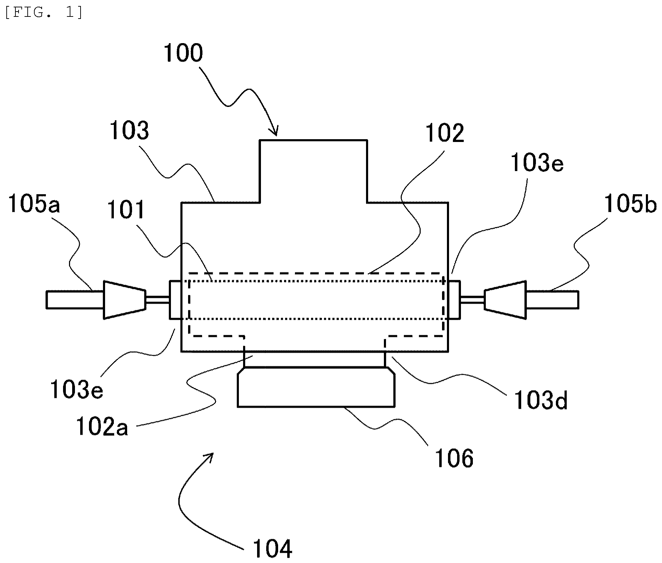

FIG. 1 is a side view schematically showing a state in which a column cartridge is provided in a chromatograph in a mass spectrometer. In the present embodiment, a sample (mobile phase) subjected to pretreatment such as purification/concentration in a pretreatment unit, which is not shown, is delivered to a chromatograph by a sampler or a delivery mechanism (syringe, delivery pump, injector, and the like), which is not shown. As shown in FIG. 1, a chromatograph 104 includes an upstream pipe 105a, a downstream pipe 105b, a heating mechanism 106, and a column cartridge 100.

The upstream pipe 105a supplies the sample to a separation column 101 of the column cartridge 100. The downstream pipe 105b discharges the sample passed through the separation column 101. The heating mechanism 106 controls a temperature of the separation column 101 via a heat transfer body 102 of the column cartridge 100 by coming into contact with the heat transfer body 102. The heating mechanism 106 includes a heat transfer portion that comes into contact with a bottom surface (heat receiving surface) of the heat transfer body 102 from below, a heater serving as a heating source that heats the heat transfer portion, a mechanism that moves the heat transfer portion in an upper-lower direction, and the like, and only the heat transfer portion is shown in FIG. 1.

The column cartridge 100 is detachably attached to the heating mechanism 106 of the chromatograph 104. The column cartridge 100 includes the separation column 101, the heat transfer body 102, and a housing 103.

The separation column 101 contains, for example, a filler having an inner diameter of 1.0 mm, a length of 50 mm, and a particle diameter of 2.6 mm as a stationary phase. As a separation mode of the separation column 101, a reverse phase mode, a forward phase mode, a molecular weight fractionation mode, a hydrophilic interaction liquid chromatography (HILIC) mode, an antigen-antibody reaction mode, and the like can be used.

The heat transfer body 102 wraps an outer periphery of the separation column 101, and has a protruding portion 102a protruding downward toward the heating mechanism 106. The heat transfer body 102 serves to transfer heat from the heating mechanism 106 to the separation column 101 by the protruding portion 102a coming into contact with the heat transfer portion of the heating mechanism 106. In the present embodiment, aluminum is used as a material of the heat transfer body 102, but the material is not limited thereto, and copper, nickel, and the like may be used as long as the material has high thermal conductivity. Further, the heat transfer body 102 is preferably a material or a material subjected to surface treatment, which can withstand corrosion by a chemical.

The housing 103 accommodates the separation column 101 and the heat transfer body 102, and a resin material is mainly used as a material thereof. The housing 103 includes a pipe connection portion 103e (opening) for connecting a pipe to the separation column 101, and a heat transfer connection portion 103d (opening) allowing the heat transfer body 102 to come into contact with the heat transfer portion of the heating mechanism 106.

When removing the separation column 101 from the chromatograph 104 for replacement, for example, an operator performs a predetermined button operation for instructing a start of work, and thereby the upstream pipe 105a, the downstream pipe 105b, and the heating mechanism 106 are automatically separated from the column cartridge 100. Thereafter, the operator grips the column cartridge 100 (specifically, a gripping portion 103c to be described later) and pulls the column cartridge 100 upward. The column cartridge 100 may also be automatically pushed upward by a predetermined button operation after being separated.

On the other hand, when the separation column 101 is attached to the chromatograph 104 for replacement, the operator fits the column cartridge 100 from above. Thereafter, for example, the operator performs a predetermined button operation for instructing an end of the work, and thereby the upstream pipe 105a and the downstream pipe 105b are automatically connected to the separation column 101, and the heating mechanism 106 automatically comes into contact with the heat transfer body 102. Completion of the fitting operation of the column cartridge 100 may be automatically detected by a sensor or the like instead of a button operation.

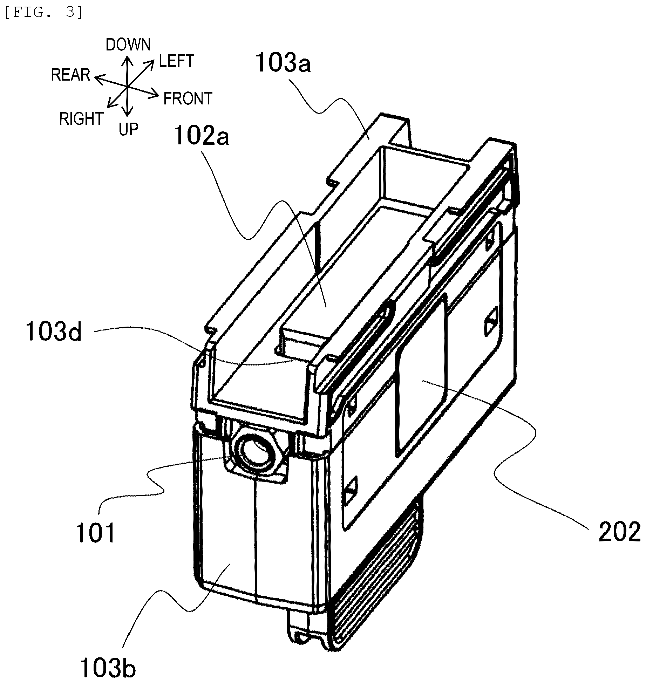

Next, an outline of a configuration of the column cartridge will be described with reference to FIGS. 2 and 3. FIG. 2 is a top perspective view showing an appearance of the column cartridge, and FIG. 3 is a bottom perspective view showing the appearance of the column cartridge.

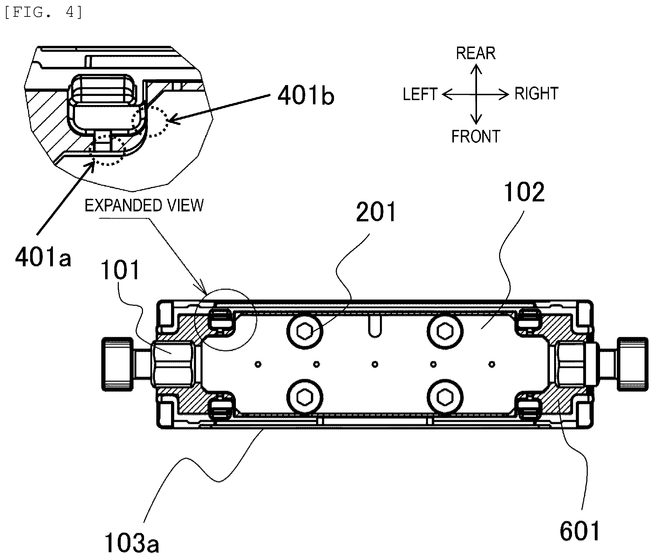

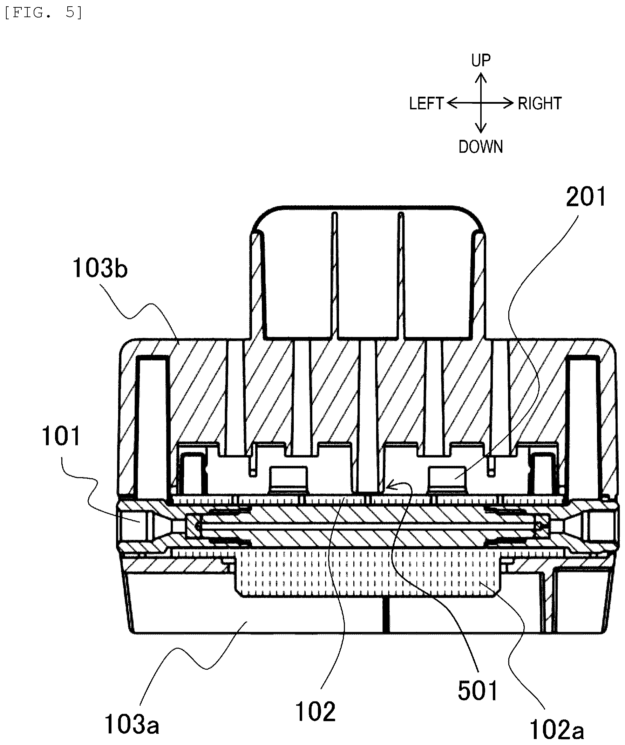

As shown in FIG. 2, in the present embodiment, the separation column 101 is fixed to the heat transfer body 102 by a fixing screw 201, but the invention is not limited thereto, and for example, both the separation column 101 and the heat transfer body 102 may have an uneven shape to be fixed by engaging the uneven shapes. The heat transfer body 102 is supported by the housing 103, and a specific support structure thereof will be described later with reference to FIGS. 4 and 5.

The housing 103 wraps the heat transfer body 102 and the separation column 101 by combining two divided members, that is, an upper housing 103b and a lower housing 103a.

The pipe connection portion 103e described above is formed on two sides of the housing 103 in a left-right direction by a lower end of the upper housing 103b and an upper end of the lower housing 103a.

The upper housing 103b is provided with the gripping portion 103c protruding upward on an upper surface thereof, and the operator can load or unload the column cartridge while gripping the gripping portion 103c when detaching or attaching the separation column 101. Further, to a side surface (front surface) of the upper housing 103b, an RFID tag 202, on which information on the separation column 101 is written, adheres, so that information on the separation column 101 can be managed by reading the RFID tag 202. A medium adhering to the upper housing 103b is not limited to the RFID tag 202, and may be other identification information such as a label on which a barcode is printed.

As shown in FIG. 3, the lower housing 103a is formed with an opening in a bottom surface thereof, and the opening serves as the heat transfer connection portion 103d. The protruding portion 102a of the heat transfer body 102 penetrates the heat transfer connection portion 103d and is exposed downward, achieving the contact with the heat transfer portion of the heating mechanism 106. The heat transfer connection portion 103d has an opening area that is equal to a cross-sectional area of the protruding portion 102a and smaller than a cross-sectional area of a body portion of the heat transfer body 102 excluding the protruding portion 102a, and thus thermal influence on the heat transfer body 102 and the separation column 101 from outside air is minimized.

FIG. 4 is a top cross-sectional view showing an internal structure of the column cartridge. As shown in FIG. 4, the lower housing 103a is provided with, on an inner side thereof, a plurality of (four) first support portions 401 that support four corners of the heat transfer body 102. Each first support portion 401 includes a front-rear direction support portion 401a that regulates a position of the heat transfer body 102 in a front-rear direction, and a left-right direction support portion 401b that regulates a position of the heat transfer body 102 in the left-right direction. For this reason, a position of the heat transfer body 102 in a horizontal direction (direction perpendicular to a protruding direction of the protruding portion 102a) is regulated in the lower housing 103a.

In positions other than the first support portions 401, a gap 601 as indicated by oblique lines in FIG. 4 is defined between the heat transfer body 102 and the lower housing 103a. The gap 601 serves as a heat insulating layer since the gap 601 defines an air layer between the heat transfer body 102 and the lower housing 103a. As a result, even when the heat transfer body 102 and the separation column 101 are temperature-controlled by the heating mechanism 106, the heat of the heating mechanism 106 is hardly transferred to the lower housing 103a. In other words, with a simple configuration, the lower housing 103a can be maintained at a temperature that does not cause burns even when touched by the operator. In addition, the RFID tag 202 adhering to the upper housing 103b can be prevented from being heated to a heat-resistant temperature or higher. Further, since no heat insulating material or the like is used, an increase in cost and environmental burden can be prevented. However, a heat insulating material or the like may be provided in a part of the gap 601 defined by the first support portion 401 as long as an increase in cost and environmental burden is within an allowed range.

A tip of the first support portion 401 (contact surface with the heat transfer body 102) is formed in, for example, a curved surface shape to reduce a contact area. A dimension of the gap 601, that is, a distance between the lower housing 103a and the heat transfer body 102 in a position excluding the first support portion 401 is preferably 0.5 mm or more. This makes it possible to improve heat insulation performance of the air layer.

FIG. 5 is a front cross-sectional view showing the internal structure of the column cartridge. As shown in FIG. 5, the upper housing 103b is provided with a (one) second support portion 501 extending downward at a center of an inner side thereof. Here, the position of the heat transfer body 102 in the horizontal direction is regulated by the first support portion 401 as described above. For this reason, a tip of the second support portion 501 can regulate a position of the heat transfer body 102 in the upper-lower direction only by pressing, at one point, a center of an upper surface of the heat transfer body 102 which is opposite from the protruding portion 102a toward a lower side of the heat transfer connection portion 103d or the heating mechanism 106. As a result, when the column cartridge 100 is installed in the chromatograph 104, an axis of the separation column 101 can be aligned with the upstream pipe 105a and the downstream pipe 105b.

In addition, a lower surface of the protruding portion 102a of the heat transfer body 102 can be brought into close contact with an upper surface of the heat transfer portion of the heating mechanism 106, and the temperature of the separation column 101 can be accurately controlled. When the tip of the second support portion 501 is also formed in a curved surface shape similar to that of the first support portion 401, the contact area with the heat transfer body 102 is reduced, and heat transfer from the heat transfer body 102 to the upper housing 103b can be prevented.

In the above-described embodiment, the heat transfer body 102 protrudes downward and comes into contact with the heating mechanism 106 located below the separation column 101. Alternatively, the heat transfer body 102 may protrude laterally (in the horizontal direction) and come into contact with the heating mechanism 106 located on a lateral side of the separation column 101. In such a configuration, the heat transfer connection portion 103d (opening) is formed on a lateral side, and the second support portion 501 extends laterally.

The invention is not limited to the embodiment described above, and includes various modifications and combinations. The invention is not limited to having all configurations described in the embodiment described above and includes a configuration in which a part of a configuration is deleted.

### Reference Signs List

- 100:: column cartridge
- 101:: separation column
- 102:: heat transfer body
- 102a:: protruding portion
- 103:: housing
- 103a:: lower housing
- 103b:: upper housing
- 103c:: gripping portion
- 103d:: heat transfer connection portion
- 103e:: pipe connection portion
- 104:: chromatograph
- 105a:: upstream pipe
- 105b:: downstream pipe
- 106:: heating mechanism
- 201:: fixing screw
- 202:: RFID tag
- 401:: first support portion
- 401a:: front-rear direction support portion
- 401b:: left-right direction support portion
- 501:: second support portion
- 601:: gap

## Claims

1. A column cartridge comprising:
a separation column having a built-in stationary phase;
a heat transfer body configured to transfer heat from a heating mechanism to the separation column; and
a housing configured to accommodate the separation column and the heat transfer body, wherein
a heat insulating layer is formed between the heat transfer body and the housing.

2. The column cartridge according to claim 1, wherein
a plurality of first support portions that support the heat transfer body are provided inside the housing, and
the heat insulating layer is a gap between the heat transfer body and the housing and is formed at a position excluding the first support portions.

3. The column cartridge according to claim 2, wherein
the gap is 0.5 mm or more.

4. The column cartridge according to claim 2, wherein
the heat transfer body has a protruding portion that protrudes through an opening formed in the housing, and the heat from the heating mechanism is transferred to the separation column via the heat transfer body when the protruding portion comes into contact with the heating mechanism,
a second support portion extending toward the opening is provided inside the housing, and
a tip of the second support portion comes into contact with an opposite side of the heat transfer body from the protruding portion.

5. The column cartridge according to claim 4, wherein
the protruding portion penetrates through the opening formed in a bottom of the housing and comes into contact with the heating mechanism located below the heat transfer body,
the first support portions regulate a horizontal position of the heat transfer body, and
the second support portion regulates a vertical position of the heat transfer body.

6. The column cartridge according to claim 5, wherein
the housing is configured with combining a lower housing and an upper housing,
the first support portions are provided in the lower housing, and
the second support portion is provided in the upper housing.

7. The column cartridge according to claim 5, wherein
the first support portions support four corners of the heat transfer body, and
the second support portion supports a center of the heat transfer body.

8. The column cartridge according to claim 4, wherein
a tip of the first support portion or the second support portion has a curved surface.

9. An analyzer comprising:
the column cartridge according to any one of claims 1 to 8;
an upstream pipe configured to supply a sample to the separation column;
a downstream pipe configured to discharge the sample that has passed through the separation column; and
the heating mechanism configured to come into contact with the heat transfer body.
